# EUROPEAN PATENT SPECIFICATION

(11) **EP 2 517 927 B1**
(45) Date of publication and mention of the grant of the patent: **08.03.2017**
(21) Application number: 10839246.5
(22) Date of filing: 14.12.2010
(51) Int. Cl.: B60N 2/44, A47C 7/62

(54) **LOAD DETECTION DEVICE MOUNTING STRUCTURE**
MONTAGESTRUKTUR FÜR EINE LASTENERKENNUNGSVORRICHTUNG
STRUCTURE DE MONTAGE POUR DISPOSITIF DÉTECTEUR DE CHARGE

(30) Priority: 21.12.2009 JP 2009288660; 26.04.2010 JP 2010100912
(43) Date of publication of application: 31.10.2012
(73) Proprietor: Aisin Seiki Kabushiki Kaisha, Aichi 448-8650 (JP)
(72) Inventor: TAKUMA, Setsu, Kariya-shi Aichi 448-8650 (JP); NAKAYAMA, Koichi, Kariya-shi Aichi 448-8650 (JP); KONDO, Hiromi, Kariya-shi Aichi 448-0027 (JP); TANAKA, Kazuya, Kariya-shi Aichi 448-0027 (JP)
(74) Representative: Intès, Didier Gérard André
(86) International application number: PCT/JP2010/072471
(87) International publication number: WO 2011/078013

(56) References cited:
- JP-A- 7 328 249
- JP-A- 2002 211 297
- JP-A- 2003 212 019
- JP-A- 2003 291 708
- JP-B2- 3 781 957

## Description

### TECHNICAL FIELD

This invention relates to a load detection device mounting structure, a load detection device of which is installed in a vehicle seat for detecting a seating condition of an occupant.

### BACKGROUND OF THE TECHNOLOGY

Conventionally, in order to improve the performance of various safety devices such as, for an example, a seat belt device or an airbag device installed in an automobile, a technology for controlling such safety devices by detecting a seating condition of an occupant of the vehicle has been developed. Under such technology, a thin flexible film shaped membrane switch, suitable for detecting the seating condition of the occupant, has been proposed. The seat cushion and the seat back of the vehicle seat are generally structured by covering a pad member formed by urethane or the like with a surface skin member, such as cloth, vinyl leather or leather. In detail, the seat cushion or the seat back is formed by pulling the surface skin member into a recessed groove provided in the outer surface of the pad member and by fixing the surface skin member pulled into the pad member to a detent member (wire) provided in the vicinity of the recessed groove by a fixture (fixing ring) so that the surface skin member can be arranged along the outer profile of the pad member.

According to thus structured vehicle seat, the recessed groove is mostly provided at a seating portion of the pad member of the seat cushion of the vehicle seat and accordingly, a conducting portion provided between detecting portions of the load detection device (membrane switch) for transmitting a signal from the detecting portions is mounted under a condition of crossing over the recessed groove. If the conducting portion is fixed to the vehicle seat and mounted under the condition of crossing over the recessed groove, the recessed groove may be deformed when a load is applied on the seat and due to the deformation of the recessed groove, the conducting portion may be deformed which may lead to wire disconnection. In order to prevent such possible wire disconnection at the conducting portion, the conducting portion is loosely provided around the recessed groove portion and inserted into the recessed groove with a sagging portion. However, since the load detection device is interposed between the surface of the pad member and the surface skin member when the load detection device is installed in the vehicle seat, it may happen that the conducting portion crossing over the recessed groove is bent sharply at the entrance position of the recessed groove when the surface skin member is pulled into the recessed groove. If the device is used for a long period of time under such condition, wire disconnection may happen at the conducting portion of the load detection device.

For this reason, according to a mounting structure for a seat sensor disclosed, for example, in the Patent Document 1 which has been invented to prevent such wire disconnection at the conducting portion, a gradually inclined portion is provided along a bottom portion of the recessed groove and the surface of the pad member, over which the wired conducting portion crosses, and the wired conducting portion is provided on the inclined portion. This can avoid the mounting condition, in which the wired conducting portion is sharply bent towards the inclined portion from the surface of the pad member.
Further, according to a mounting structure for a seat sensor disclosed in the Patent Document 2, there is provided a deep groove portion that penetrates from the recessed groove towards the back surface of the pad member at the inserting portion of the pad member for inserting the bent potion of the conduction portion The bent potion is freely movable within the deep groove portion in an upper/lower direction by a sliding movement between the bent portion and the wall surfaces of the deep groove portion when the pad member is compressed to deform downward by the seating load applied to the pad member.

### THE DOCUMENT OF CONVENTIONAL TECHNOLOGY

### PATENT DOCUMENT

Patent Document 1: Specification of Patent No.JP3781957
Patent Document 2: Specification of JP 2002 211297 A.

### DISCLOSURE OF THE INVENTION

### PROBLEMS TO BE SOLVED BY THE INVENTION

However, according to the conventional technology disclosed, for example, in the Patent Document 1, when a load is applied and the pad member is deformed, the turned-back portion of the signal wire which is fixed to the outer surface of the pad member, disposed in the hung groove and in contact with the bottom portion of the hung groove receives a reaction force from the bottom portion. By this reaction force, the signal wire may be bent partly and deformed and the stress is generated at the deformed portion which may lead to the disconnection of the wire.
Further, according to the technology disclosed in the Patent Document 2, it is difficult to reduce the contact area between the back surface of the bent portion and the wall surfaces of the deep groove portion and to avoid a tip end portion of the ben portion to be brought into contact with the bottom of the deep groove portion. Accordingly, the excess stress by the deformation of the bent portion may be generated by the frictional resistance between the back surface of the bent portion and the wall surfaces of the deep groove portion or by the contact of the tip end portion of the bent portion with the bottom of the deep groove potion, which may cause the wire disconnection at the conduction portion.

The present invention was made in consideration with the above problems and the object of the invention is to provide a load detection device mounting structure for a vehicle seat which can prevent wire disconnection at the load detection device with a simple and low cost structure.

### MEANS FOR SOLVING THE PROBLEMS

The invention associated with claim 1 for solving the above problems is a load detection device mounting structure, a load detection device of which comprises a plurality of detecting portions to be brought into contact with a seating-side outer surface of a pad member of a vehicle to detect a load applied to the pad member, an external output portion for outputting a load signal detected by the detecting portions and conducting portions for conducting between two of the plurality of detecting portions and between the detecting portions and the external output portion, wherein the film shaped load detection device is mounted to the vehicle seat by inserting a bent portion formed by bending at least a portion of the conducting portions into the recessed groove between a seating-side outer surface of the pad member having a recessed groove formed by depression therein and a surface skin member mounted on the pad member to cover the seating-side outer surface in a manner of crossing over the recessed groove, sliding portions are provided at a pair of oppositely facing inner side surfaces of the groove, with which back surface of the bent portion is brought into contact, and a penetrating bore penetrating from the recessed groove to the back surface of the pad member is provided at the inserting portion of the pad member for inserting the bent portion and the bent portion is freely movable within the penetrating bore in an upper/lower direction by a sliding movement between the bent portion and the sliding portions when the pad member is compressed to deform downward by the seating load applied to the pad member, and the penetrating bore is formed to have a width wider than a gap between the oppositely facing sliding portions so that the back surface of the conducting portion of the film shaped load detection device may not be brought into contact with the penetrating bore when a tip end portion of the bent portion of the film shaped load detection device is inserted into the penetrating bore, further the penetrating bore being formed by inclined surfaces so that widths thereof gradually increase towards the back surface of the pad member.

The invention associated with claim 2 for solving the above problems is that in claim 1, the penetrating bore is formed extending in the oppositely facing inner side surfaces of the recessed groove up to the sliding portions.

The invention associated with claim 3 for solving the above problems is that in claim 1 or 2, the width of the portion of the conducting portion to be brought slidable contact with the sliding portions is smaller than the width of the other portion of the conducting portion.

The invention associated with claim 4 for solving the above problems is that in any one of claims 1 through 3, rounded portions (R-portion) are provided at connecting portions between the inner side surfaces of the recessed groove and the seating-side outer surface of the pad member.

The invention associated with claim 5 for solving the above problems is that in any of the claims 1 through 4, a length of the conducting portion between the two detecting portions is set so that a pitch length of the two detecting portions located at both sides of the recessed groove may become a predetermined value when the conducting portion is bent to be brought into contact with the sliding portions to be mounted.

### THE EFFECTS OF THE INVENTION

In the above-mentioned structure of the invention of claim 1, when a large load is applied on the pad member due to seating of an occupant of a vehicle and the pad member is deformed to sink, the bent portion inserted into the recessed groove also sinks together with the pad member and the back side surfaces of the bent portion slides on the sliding portions. Under such condition, the reaction force received by the portions (slide portions) which are slidable on the sliding portions becomes less than that received thereby when the advancement of the bent portion is restricted because the bent portion can advance into the penetrating bore. Therefore, a partial bending deformation at the bent portion is hardly generated to prevent any wire disconnection or damage derived thereby. The amount of depth of sinking of the pad member becomes extremely large, particularly when a large load is partially applied to the pad member due to a kneeling down posture or a stepping posture of the occupant of the seat. However, since the bent portion can be extendable from the penetrating bore, the reaction force received by the slide portions can be reduced by moving by the same amount as the sinking amount of the pad member. Thus, the movement of the bent portion is hardly restricted even when a large sinking amount is applied on the bent portion. Accordingly, a wire disconnection or damage derived from the partial bending deformation can be properly restricted.

Further, since the conducting portion is disposed in the recessed groove by bending formation, the elasticity generated at the bent portion can be utilized to mount the conducting portion to the recessed groove by contacting the back surface of the bent portion with the sliding portions, so that mounting thereof can be easily achieved.

Further, the penetrating bore is formed to have a width wider than the width of the gap between the sliding portions to avoid the contact between the back surface of the bent portion and the wall surfaces of the penetrating bore. Accordingly, since the back surface of the bent portion makes slidable contact with only the sliding portions, the sliding resistance received by the bent portion is sufficiently small not to generate excess stress by the bending deformation due to the received friction force. And, it becomes easier to draft the recessed groove and the penetrating bore from a die compared to the case where the penetrating bore is formed in such a manner that the width thereof is the same as that of the recessed groove and thereby, the cost of manufacturing the pad member can be reduced.

According to the above-mentioned structure of the invention of claim 2, since the penetrating bore is formed to extend in the oppositely facing inner side surfaces of the recessed groove, the length of the sliding portions in a sliding direction can be freely shortened. Thus, the sliding contact area between the bent portion and the sliding portions can be further distanced from the tip end of the bent portion where the force pushing the sliding portions generated by the bent portion elastically returning to the original state is the strongest, so that the force pushing the sliding portions can be reduced to appropriately restrict the sliding resistance applied to the bent portion during the sliding movement. This can smoothly slide the bent portion without receiving resistance force so that the excess stress may not be generated by the bending deformation caused by the friction force between the bent portion and the sliding portions. By shortening the distance between the sliding portions, the curvature at the tip end of the bent portion becomes greater to generate larger force acting on the sliding portions. However, by shortening the length of the sliding portions in a sliding direction, the area of the bent portion where the bent portion slides on the sliding portions can be further distanced from the tip end of the bent portion and accordingly, the gap between the sliding portions, in other words, the gap of the recessed groove can be reduced to improve the outer appearance and to reduce the strange feeling felt by the occupant when touching the recessed groove during being seated on the seat.

According to the above-mentioned structure of the invention of claim 3, since the width of the portions to be brought into slidable contact with the sliding portions are formed to be narrower than the width of the other portions not to be brought into slidable contact with the sliding portions, the portions to be brought into slidable contact with the sliding portions are more flexible than the other portions. Thus, the pushing force from the conducting portion acting on the sliding portions during the sliding movement can be reduced and accordingly, the sliding resistance applied to the conducting portion can be restricted. By restricting the resistance force, the conducting portion can surely perform the sliding movement and thereby, the conducting portion is not deformed by receiving the excess resistance force from the sliding portions to prevent the generation of the excess stress in the vent portion by the bending deformation thereof.

According to the above-mentioned structure of the invention of claim 4, since the R-portions are formed at the connecting portions between the groove inner side surfaces of the recessed groove and the seating-side outer surface of the pad member, the bent portion can be surely bent along the round shape of the R-portion and the bending deformation at this portion can be prevented.

In the above-mentioned structure of the invention of claim 5, the length of the conducting portion between the two detecting portions is set so that a pitch length between the two detecting portions located at both sides of the recessed groove becomes a predetermined value when the conducting portion is bent to come into contact with the sliding portions to be mounted. In other words, the pitch length of the two detecting portions to be located at both sides of the recessed groove can be easily set by setting the length of the conducting portion to be inserted into the recessed groove. In addition, since the penetrating bore is provided from the bottom or a lower portion of the recessed groove to allow the bent portion to advance thereinto, the bent portion can be mounted along the inner surfaces of the recessed portion in wide range of depth with less limitation. Accordingly, by this structure, the pitch length of the two detecting portions located at both sides of the recessed groove can be widely selected and even at the case where the mounting pitch length for the detecting portions is different, a common load detection device can be easily utilized. This can accelerate the common use of the load detection device, which can lead to a cost reduction as a whole.

### BRIEF EXPLANATION OF ATTACHED DRAWINGS

[Fig. 1] is a perspective view of an overall vehicle seat structure, to which the load detection device mounting structure according to the invention is adaptable;
[Fig. 2] is an upper side view of the seat cushion of the vehicle seat;
[Fig. 3] is a partially broken enlarged view of Fig.2;
[Fig. 4] shows an upper side view (a) and a lower side view (b) of the load detection device;
[Fig. 5] is a cross sectional view of the seat cushion of the vehicle seat shown in Fig. 2 taken along the line 5-5 in Fig. 2;
[Fig. 6] shows a cross sectional view (a) taken along the line 6-6 of Fig. 3 and a view (b) similar to the view (a) but showing the pad member being sunk by the input of a downward large load;
[Fig. 7] is shows a cross sectional view (a) of a mounting structure of a conventional technology corresponding to Fig. 6, and a view (b) similar to the view (a) but showing the pad member being sunk by the input of a downward large load;
[Fig. 8] is a cross sectional view of an insertion bore showing a modified example 1;
[Fig. 9] is a cross sectional view of an insertion bore showing a modified example 2;
[Fig. 10] is a view of the load detection device according to the second embodiment of the invention;
[Fig. 11] is a cross sectional view of an insertion bore according to the embodiment of the invention;
[Fig. 12] a cross sectional view of an insertion bore showing a modified example 3; and
[Fig. 13] is a view showing the load detection device according to another embodiment of the invention.

### THE EMBODIMENTS OF THE INVENTION

The first embodiment of the load detection device mounting structure for a vehicle seat adapted to a vehicle seat will be explained with reference to the attached drawings. It is noted here that the directions indicated by the words "front and rear, right and left and upper and lower" are referenced as the vehicle based directions.

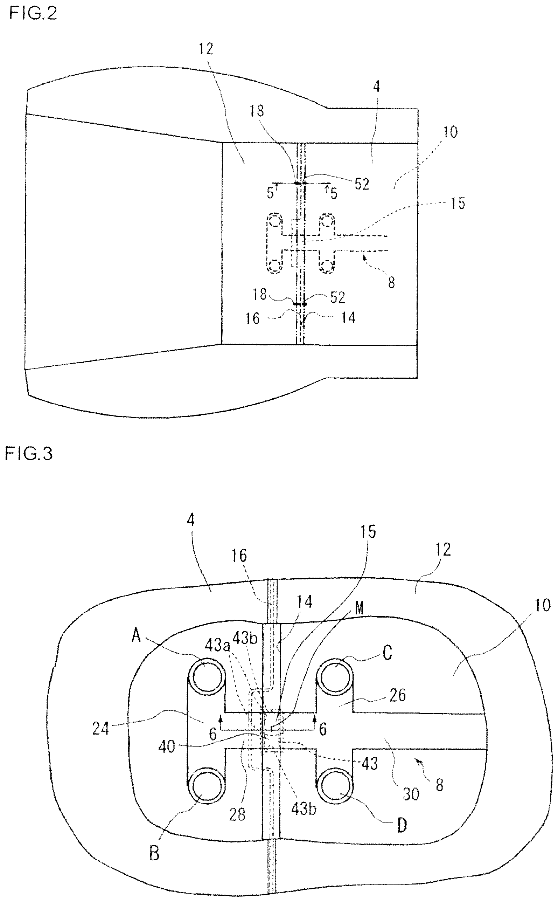

The vehicle seat 2 is provided with a seat cushion 4, a film shaped load detection device 8 and a seat back 6 as shown in fig. 1. The seat cushion 4 is formed by a pad member 10 made of urethane material or the like and a surface skin member 12 made of cloth (or artificial leather or genuine leather) which covers an upper surface which corresponds to the seating-side outer surface of the pad member 10. As shown in Fig. 3, a portion of the outer surface of the pad member 10 is provided with a recessed groove 14 formed by depression therein and extending in the right/left direction (upper/lower direction as viewed in Fig. 3).

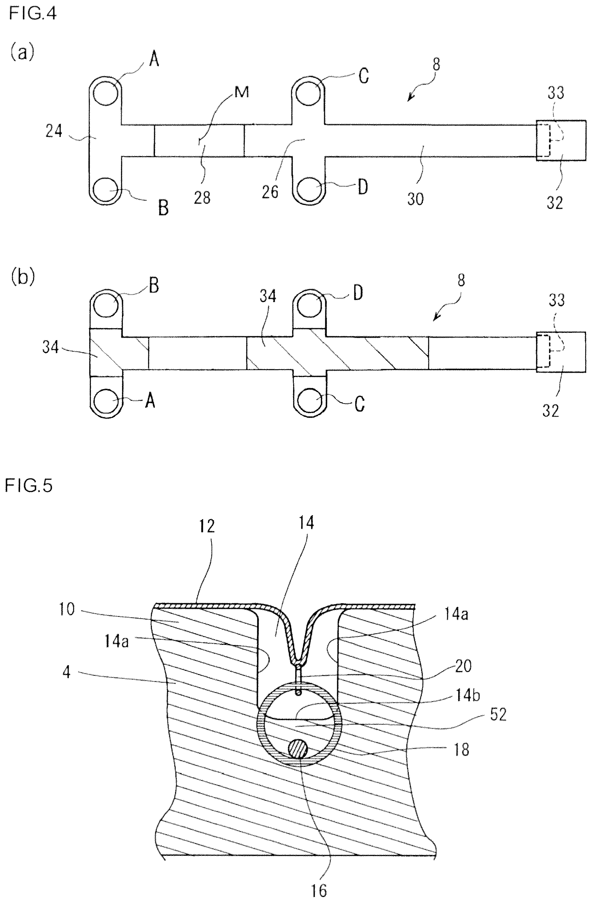

The load detection device 8 is a membrane switch and is disposed between the pad member 10 and the surface skin member 12 which covers the pad member 10. The load detection device 8, as shown with a plan view of Fig. 4 (a), is provided with contacts A through D which are served as a plurality of (in this embodiment, four of) detecting portions for detecting a load applied on the pad member 10, the back side surfaces of the detecting portions being brought into contact with the seating-side outer surface of the pad member 10, an external output portion 33 for outputting load signals detected by the contacts A through D and first, second, third and fourth conducting portions 24, 26, 28 and 30 for conducting the four contacts A through D and between the four contacts A through D and the external output portion 33. It is noted here that hereinafter, the side to be in contact with the seating-side outer surface of the pad member 10 is referred to as "the back surface" and the side to be in contact with the surface skin member 12 is referred to as "the front surface".

The four contacts A through D serving as the detecting portions are positioned at each corner of a rectangular shape, which are the predetermined positions for forming the rectangular shape with the four contacts A through D. The conducting portion includes the first conducting portion 24 for connecting the contacts A and B, the second conducting portion 26 for connecting the contacts C and D, the third conducting portion 28 for connecting the first and the second conducting portions 24 and 26 and the fourth conducting portion 30 for connecting the third conducting portion 28 with a connector 32 provided at a base end portion thereof. As shown in Figs. 4 (a) and (b), the base end portion of the load detection device 8 is provided with the external output portion 33. The external output portion 33 is used for outputting the load detected by the detecting portion (contacts A through D) and is provided with output electrodes. This external output portion 33 is connected to the connector 32. The connector 32 is connected to an ECU (Electronic Control Unit) not shown in the drawings. The ECU judges whether an occupant of the vehicle seat is seated or not.

The load detection device 8 is formed to be of film shape by putting a pair of upper and lower films together, both being not shown, interposing an insulating spacer therebetween. The upper and lower films are made of thin film shaped resin material, such as for example, polyethylene naphthalate (PEN) and form the outer shape of the contacts A through D and the conducting portions 24, 26, 28 and 30. The insulating spacer is made of resin, for example, polyethylene terephthalate (PET) and has an outer shape approximately corresponding to the outer profiles of the upper and lower films. Circular openings are provided at the positions corresponding to the contacts, respectively.

With respect to the contacts A through D, a circular upper electrode (not shown) provided on the upper film and a circular lower electrode (not shown) provided on the lower film are positioned co-centrically facing with each other, sandwiching the opening. When the contacts receive a load equal to or more than a predetermined value in a thickness direction, the upper and the lower electrodes come into contact to turn the switch ON. Then, the electric current flows therethrough to detect the input of load which is equal to or more than the predetermined value. The electrodes of contact A through D are connected to the electrodes of the external output portion 33 by wiring through conducting portion 24, 26, 28 and 30.

With respect to each conducting portion 24, 26, 28 and 30, a symbol "M" is marked on the middle portion of the third conducting portion 28 forming an in-between space formed between the contacts A and B and the contacts C and D. The third conducting portion 28 crosses over the recessed groove 14 at the intersection 15 and the symbol "M" comes to approximately the middle position of the intersection 15. Then a bent portion 28a, formed by bending the third conducting portion 28 positioned at the intersection 15 in the recessed groove14, is inserted into an insertion bore 40 which corresponds to the insertion portion later explained in detail by a predetermined amount. By this structure, the contacts A and B and the contacts C and D which are positioned at both sides of the insertion bore 40 (recessed groove 14) are disposed at a predetermined respective detecting positions, crossing over the insertion bore 40 (recessed groove 14) and being an equal distance apart from the insertion bore 40 (recessed groove 14). The contacts A and B as well as the contacts C and D are formed maintaining a predetermined distance therebetween.

According to this embodiment, the contacts A and B and the contacts C and D are arranged crossing over the insertion bore 40 (recessed groove 14) and being the equal distance apart from the insertion bore 40 (recessed groove 14), but the invention is not limited only to this structure. The ratio of the distances from the insertion bore 40 (recessed groove 14) to the contacts A and B and to the contacts C and D can be changed by freely changing the position of symbol "M" marked on the third conducting portion 28, which is positioned at the approximately middle portion of the intersection 15. Or even the symbol "M" may be omitted. Under the condition where the bent portion 28a is inserted into the insertion bore 40, the load detection device 8 comes into contact with the seating-side outer surface of the pad member 10, being fixed thereto.

In order to fix the load detection device 8 to the seating-side outer surface of the pad member 10, as shown with the back surface view illustrated in Fig. 4 (b), a double-sided tape 34 (indicated with the hatched lines) may be used or an adhesive agent (bond) may be coated on the surface thereof. The double-sided tape 34 is not adhered to the back surface of the contacts A through D in this embodiment, but mainly the tape is adhered to the back surface of the conducting portions 24, 26 and 30. By this structure, the conducting portions 24, 26 and 30 can be surely adhered to and fixed to the seating-side outer surface of the pad member 10 by means of the adhesive of double-sided tape. At the same time any uncomfortable seating feeling caused by a misalignment between the load detection device 8 and the pad member 10 can be suppressed. Further, since the double-sided tape is not provided on the conducting portion 28, the bent portion 28a can be freely movable within the insertion bore 40 in an upper/lower direction. It is noted here that in this embodiment, the double-sided tape is not adhered to the back surfaces of the contacts A through D, but the double-sided tape may be adhered to the back surfaces of these contacts A through D. This structure also sufficiently assures the detection sensitivity of the input load to the contacts A through D.

The structure of the bent portion 28a will be explained later in detail. But in brief, the bent portion 28a is formed by a portion of the third conducting portion 28 and includes first bent portions 44 and 44 bent at the opening edges of the recessed groove 14, a second bent portion 28b which is a tip end portion of the bent portion reaching to a later explained penetrating bore 43 and formed to be open towards the opening of the recessed groove 14. In other words, the bent portion 28a corresponds to the portion of the third conducting portion 28 that is inserted into the insertion bore 40 (recessed groove 14 and penetrating bore 43).

Next, the recessed groove 14 which is formed by being depressed in a portion of the upper surface of the pad member 10 of the seat cushion 4 and an insertion bore 40 which is associated with the present invention and a portion of which is formed at a portion of the recessed groove 14 will be explained in detail. The recessed groove 14, as mentioned previously, extends in a right/left direction (in vertical direction as viewed in Fig. 3) relative to the pad member 10 as shown in Figs. 2 and 3. The recessed groove 14 includes groove inner side surfaces 14a and 14a, extending in parallel with each other in an approximately upper/lower direction and a bottom portion 14b connecting the groove inner side surfaces 14a and 14a at the lower portions thereof as shown with the cross sectional view illustrated in Fig. 5.

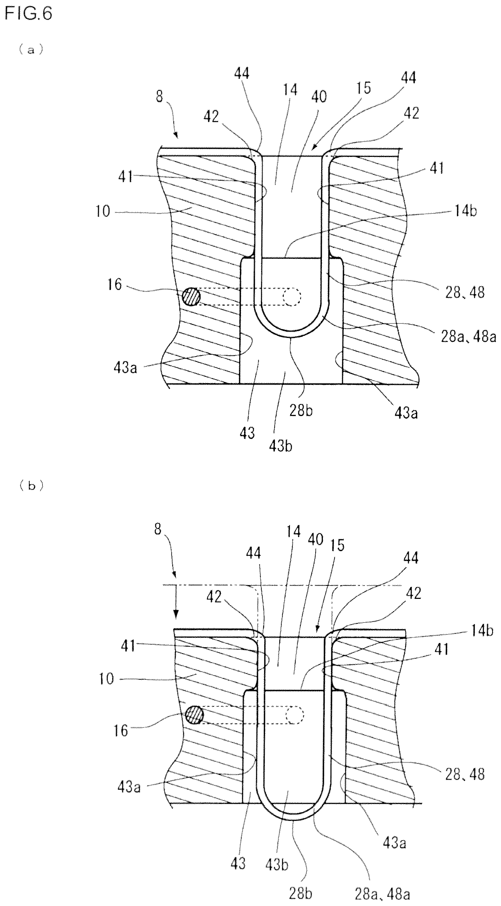

As shown in Figs. 2 and 3, the insertion bore 40 are formed continuously with the recessed groove 14 at the lower portion of the intersection 15 of the recessed groove 14 where a portion of the load detection device 8 crosses over the recessed groove 14. As shown in Fig. 6(a) which is a cross sectional view of the pad member taken along the line 6-6 of Fig. 3, the insertion bore 40 includes a pair of sliding portions 41 and 41, a pair of rounded (R-shaped) portions 42 and 42 and a penetrating bore 43. The pair of sliding portions 41 and 41 is oppositely formed on the pair of groove inner side surfaces 14a and 14a which is formed continuously with the recessed groove 14 so that the back surface of the bent portion 28a which is formed when the third conducting portion 28 is inserted into the insertion bore 40 may come into slidable contact therewith. Respective sliding portions 41 and 41 are formed to have a smaller surface roughness compared to those of the groove inner side surfaces 14a and 14a of the recessed groove 14 to be smoothly slidable relative to the back surface of the bent portion 28a. However, the invention is not limited to this structure and for example, the surface roughness of the sliding portions 41 and 41 may be the same surface roughness as those of the groove inner side surfaces 14a and 14a of the recessed groove 14. According to this structure the same effects can be also obtained.

The rounded (R) portions 42 and 42 are formed at the portions which connects the seating-side outer surface of the pad member 10 and the sliding portions 41 and 41 with a predetermined roundness so that the rounded portions come into contact with the bent portion 28a inserted into the insertion bore 40. It is noted that the predetermined roundness R is determined to have large enough radius to prevent the first bent portions 44 and 44 from being damaged by a partially applied stress due to a steep angle bending generated at the rounded portions. The first bent portions 44 and 44 are formed by bending the third conducting portion 28 along the R-shaped configurations when the third conducting portion 28 is inserted into the insertion bore 40 from the seating-side outer surface of the pad member 10.Respective rounded portions (R) 42 and 42 support the first bent portions 44 and 44 which are the contact portions of the bent portion 28a brought into contact therewith, which makes the profile of the first bent portions 44 and 44 follow the outer profile of the R portions 42 and 42 so as to prevent the deformation of the bent portion 28a. In other words, it is prevented that large gaps are generated between the R-portions 42 and 42 and the bent portion 28a contacting with R-portions 42 and 42 when the back surface of the bent portion 28a moves upward or downward sliding on the sliding portions 41 and 41. Thereby, the bending deformation of the bent portion 28a is prevented. It is noted here that such rounded portions 42 and 42 may be provided not only at the entrance portions of the insertion bore 40 but also at the entrance portions of the recessed groove 14. According to this embodiment, such structure is adopted. Further, the radius of roundness of the rounded portions 42 and 42 and the radius of the rounded portions provided at the entrance portion of the recessed groove 14 may be differently set.

The penetrating bore 43 is formed to be of rectangular shape when seen from the upper side thereof by forming a pair of oppositely facing wall surfaces 43a and 43a with a width wider than the gap between sliding portions 41 and 41 and a pair of oppositely facing wall surfaces 43b and 43b with a width wider than the width of the bent portion 28a in a direction perpendicular to the lengthwise direction of the bent portion 28a. The penetrating bore 43 is formed to penetrate from the bottom portion 14b of the recessed groove 14 through the back portion of the pad member 10 so that the bent portion 28a and the second bent portion 28b which forms the tip end of the bent portion 28a can be advanced thereinto, when the bent portion 28a of the third conducting portion 28 is inserted into the insertion bore 40. In more detail, as shown in Fig. 6 (b), when the occupant of the vehicle is seated on the upper surface of the pad member 10, a large load as the seating load is applied downward to compress and deform the pad member 10. Then the back surface of the bent portion 28a slides on the sliding portions 41 and 41 to move downwards. However, the back surface of the bent portion 28a and the second bent portion 28b which is the tip end of the bent portion 28a are passing through the penetrating bore 43 without making any contact with the wall surfaces forming the penetrating bore 43 and projecting from the back surface of the pad member 10 so as to finish the downward movement without receiving any stress.

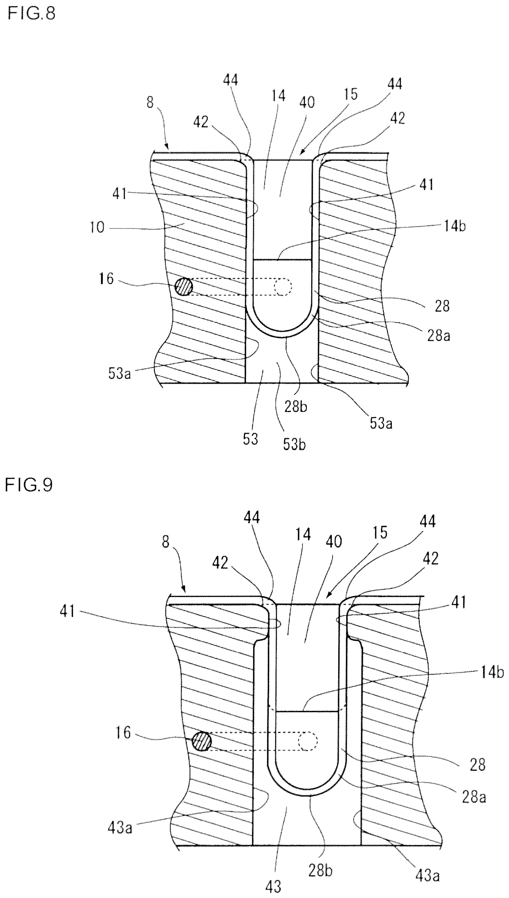

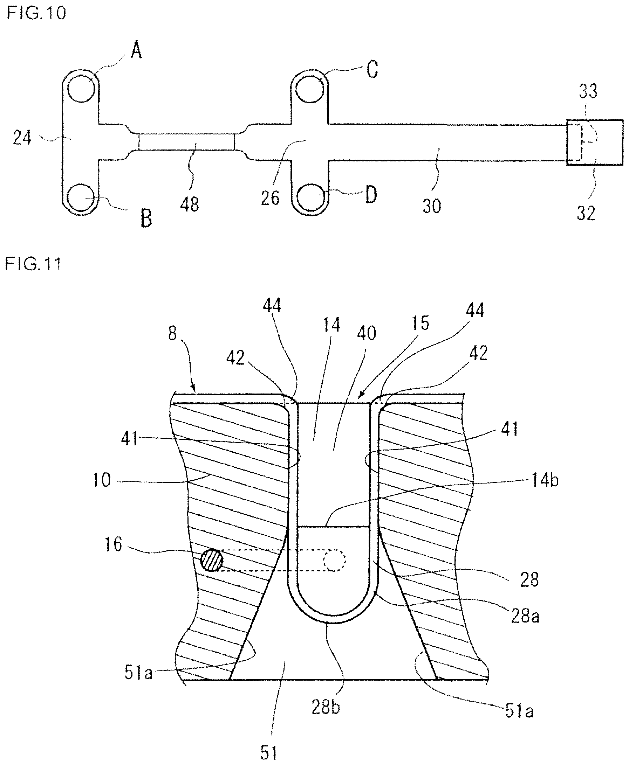

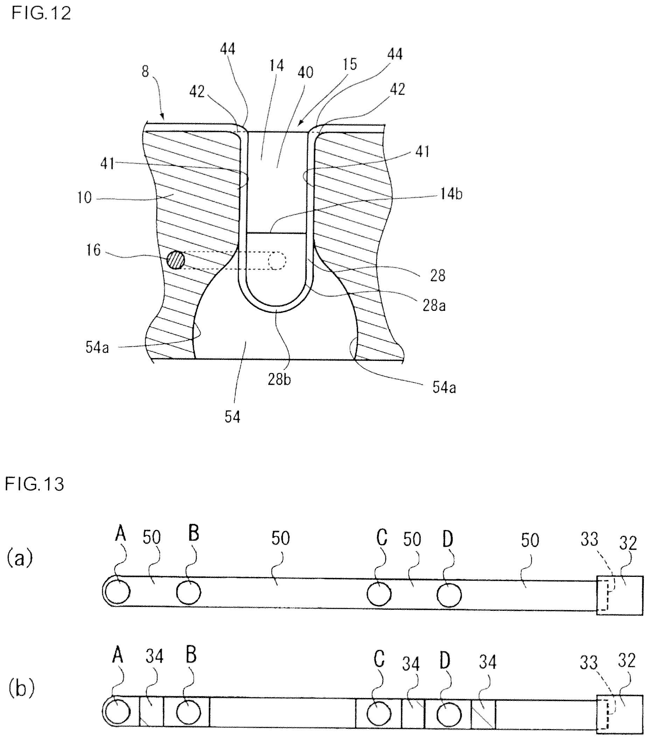

Thus though the bent portion 28a freely moves within the insertion bore 40 in an upper/lower direction, the back surface of the bent portion 28a does not come into contact with the wall surfaces forming the penetrating bore 43 and does not receive the resistance force from the penetrating bore 43. It is noted that the distance between the sliding portions 41 and 41 and the distance between the wall surfaces 43a and 43a of the penetrating bore 43 which are in parallel with the surfaces of the sliding portions 41 and 41 may be set to be the same (refer to the modified example 1 shown in Fig. 8). With this structure, the downward movement of the bent portion 28a is not restricted by the wall surfaces 53a, 53a and 53b, 53b forming the penetrating bore 53 and the effects of providing the penetrating bore 53 can be achieved. As shown in the first embodiment of the invention illustrated in Fig. 11, the penetrating bore is be a penetrating bore 51 which is formed by inclined surfaces 51a and 51a so that widths thereof gradually increase towards the back surface of the pad member 10. Further, as shown in the modified example 4 illustrated in Fig. 12, the penetrating bore can be a penetrating bore 54 formed by the curved surfaces 54a and 54a, which also achieves the same effects of the invention.

In a lower side of the recessed groove 14 within the pad member 10, a detent member 16 formed by a metal wire material is buried avoiding the location of the intersection 15, which extends approximately to full extent of the recessed groove in width direction as shown in Figs. 2, 3, 5, 6, 8 and 9. In other words, the detent member 16 buried in the pad member 10 is provided along the recessed groove but bypassing around the lower side of the intersection 15 as shown with the broken line in Fig. 3.

Further, as shown in Figs. 2 and 5, portions of the surface skin member 12, to which hook members 20 are fixed, are inserted into the recessed groove 14 and the detent members 16 are exposed at exposed portions 52 which are positioned at both sides of a center of the seat cushion 4 apart from the center in the crosswise direction. The hook members 20 are connected by means of fixing rings 18 to the detent members 16 to fix the surface skin member 12 to the pad member 10 along the outer surface thereof. Thus, the recessed groove 14 is a suspended groove formed to suspend the surface skin member 12.

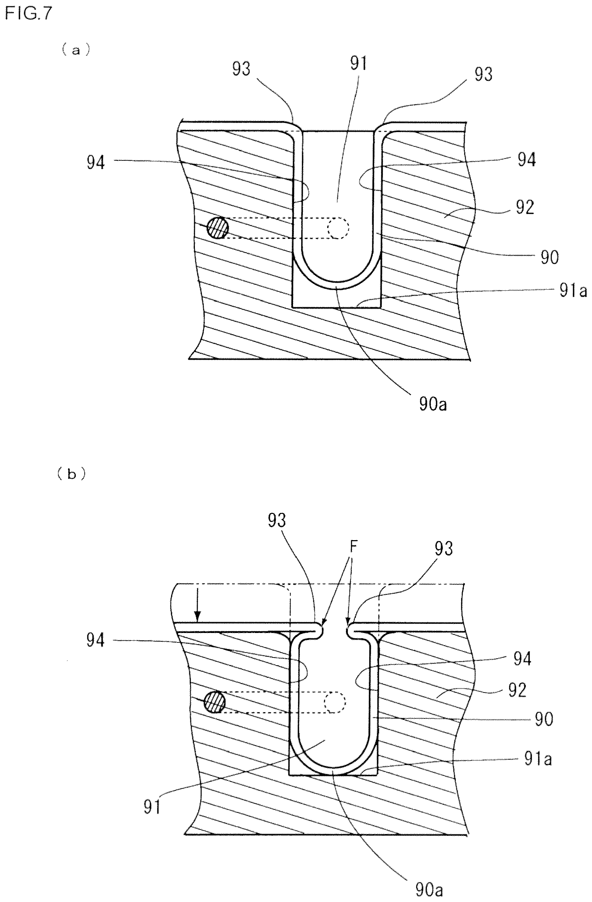

Next, the operation of the load detection device 8 mounting structure according to the first embodiment will be explained hereinafter. First, the operation of the structure without provision of the penetrating bore 14 at the recessed groove 14 will be explained for comparison purposes with reference to Fig. 7. Fig. 7 shows the cross sectional view of the mounting structure sectioned along the portion of the bent portion 90 inserted into the recessed groove 91 similar to the view shown in Fig. 11 illustrating the present invention. The difference between Fig. 11 and Fig. 7 is whether there is the penetrating bore 14 or not. The cross sectional view illustrated in Fig. 7 (a) shows the condition that the occupant is not seated on the pad member 92, while the cross sectional view illustrated in Fig. 7 (b) shows the condition that the occupant is seated on the pad member 91 and a large load is applied downward to compress and deform the pad member 92 thereby the pad member 92 being largely sunk. As is clearly shown in Fig. 7 (b), without providing the penetrating bore, the second bent portion 90a corresponding to the tip end of the bent portion 90 which moves downwardly with the pad member 92, eventually is brought into contact with the bottom portion 91 a of the recessed groove 91. Then the second bent portion 90a receives the reaction force from the bottom portion 91 a of the recessed groove 91. This reaction force is a cause of deformation of the bent portion 90 in a direction where the curvature of the bent portion 90 becomes large. Thus the contact portion of the bent portion 90 slidably contacting with the sliding portions 94 pushes the sliding portions 94 and the reaction force from the sliding portions 94 will bend and deform the first bent portion 93 as shown by arrows F, which corresponds to the bent portion to be bent inwardly into the recessed groove from the upper surface of the pad member 92 (Refer to Fig. 7 (b)). This condition may lead to a wire disconnection or a breakage at the bent portion 93.

Next, the operation of the load detection device 8 mounting structure according to the invention will be explained hereinafter. The bent portion 28a of the third conducting portion 28 of the load detection device 8 is inserted into the insertion bore 40 formed at the recessed groove 14 by a predetermined length. At the upper surface of the pad member 10 at both sides of the insertion bore 40, the contacts A and B and contacts C and D connected to the third conducting portion 28 are attached with a predetermined pitch (distance). In other words, the third conducting portion 28 determining a distance between the contacts A and B and the contacts C and D is formed having the predetermined length and accordingly, by inserting the bent portion 28a into the insertion bore 40 by the predetermined depth length, the contacts A and B and the contacts C and D are fixed with the predetermined pitch (at the predetermined distance from each other).

Then, when the occupant is seated on the upper surface of the pad member 10 covered by the surface skin member 12, the pad member 10 sinks downward, and particularly the portion thereof in the vicinity of the insertion bore 40 (recessed groove 14) including the intersection 15 sinks with a large deformation due to the space formed by the groove. However, since the pad member 10 cannot be moved as a whole in an upper/lower direction because the back surface thereof is fixed, the amount of sinking of the pad member 10 is gradually decreased towards the back surface from the upper surface.

On the other hand, the load detection device 8 fixed to the upper surface of the pad member 10 and the bent portion 28a of the load detection device 8 which is inserted into the insertion bore 40 and pushes the sliding portions 41 and 41 in a direction perpendicular to the surfaces of the sliding portions 41 and 41 by the elastic force generated by the bending deformation are moved downward at the same time with the upper surface of the pad member 10 by the same amount as the upper surface.

By this movement, a relative movement is generated between the sliding portions 41 and 41 lower than the upper surface of the pad member 10, sliding portions being formed in the pad member 10, and the back surface of the bent portion 28a which sinks by the same amount as the upper surface of the pad member 10. However, the bent portion 28a smoothly slides on the sliding portions 41 and 41 not to be deformed by the resistance force from the sliding portions 41 and 41. In other words, the bent portion 28a would not suffer a wire-disconnection or damage due to the stress which would be generated when the bent portion 28a is deformed (Refer to Fig. 6(a), (b)).

Further, the insertion bore 40 includes the penetrating bore 51 formed by the wall surfaces 51 a and 51 a having a gap therebetween larger than the gap between the sliding portions 41 and 41 at the position lower than the sliding portions 41 and 41. Accordingly, the bent portion 28a including the tip end portion 28b is not restricted to move downward, protruding from the back surface of the pad member 10 and thereby, the back surface of the bent portion 28a does not receive the friction force from the wall surfaces forming the penetrating bore 51 by contacting with the wall surfaces regardless of how large load is applied to the pad member 10 in a downward direction and how deep the pad member 10 is sunk. Thus, according to the load detection device 8 mounting structure associated with the present invention, the movement of the bent portion 28a is not restricted by the wall surfaces of the penetrating bore 51 and does not receive the reaction force from the wall surfaces and accordingly, the bent portion 28a would not suffer wire-disconnection due to the deflection caused by the reaction force which would be applied to the bent portion 28a by the surfaces restricting the movement of the bent portion potion 28a if the penetrating bore is not formed, as explained comparing with the structure without penetrating bore shown in Fig. 7.

Further, when the occupant is seated on the vehicle seat 2, any one the contacts A through D of the load detection device 8 turns on to flow electric current through the electric circuit formed in the load detection device 8. The ECU judges that an occupant is seated on the seat cushion 4 (judges that a load equal to or more than a predetermined value is applied on the seat cushion) based on the seated detecting signal generated by the electric current. Thus, for example, the airbag device can be set to be operable or warning can be issued for a seatbelt to be fastened.

As clear from the explanation above, according to the first embodiment of the invention, the insertion bore 40 at the recessed groove 14 into which the third conducting portion 28 of the load detection device 8 is inserted to form the bent portion by bending is provided with the sliding portions 41 and 41, the rounded (R) portions 42 and 42 and the penetrating bore 51. The sliding portions 41 and 41 oppositely face each other and the back surface of the film shaped third conducting portion 28 of the load detection device 8 slides thereon. The rounded (R) portions 42 and 42 are formed at the connecting portions between the seating-side outer surface and the sliding portions 41 and 41 and are in contact with the first bent portions 44 and 44. The penetrating bore 51 is formed through the back surface of the pad member 10 from the bottom portion 14b of the recessed groove 14 in the insertion bore 40 so that the second bent portion 28b which corresponds to the tip end portion of the bent portion 28a is able to advance therethrough.

According to this structure, when the pad member 10 is sunk downward and is compressed to be deformed by a large load being applied to the pad member 10 due to the seating of the occupant on the vehicle seat, the bent portion 28a which has been inserted into the recessed groove 14 also sinks together with the pad member 10 by the sliding movement of the back surface of the bent portion 28a on the sliding portions 41 and 41. By the advancing movement of the bent portion 28a into the insertion bore 43, portions (slide portions) being in slidable contact with the sliding portions 41 and 41 becomes to hardly receive the reaction force which would be applied to the slide portions from the sliding portions 41 and 41 when the advancement of the bent portion 28a is restricted. This will restrict a partial bending deformation of the bent portion 28a to prevent any wire disconnection or the damages derived therefrom. Particularly, the kneeling down posture or the stepping posture of the occupant of the vehicle applies a large load partially to the pad member 10 and accordingly, the sinking amount may greatly increase. However, since the bent portion 28a can advance through the penetrating bore 43 and extend outwardly, the bent portion 28a can move by an amount which corresponds to the sinking amount of the pad member 10 to almost disappear or to reduce the reaction force applied to the slide portions of the bent portion 28a. Thus even when a large amount of sinking is applied to the bent portion 28a, the movement of the bent portion 28a is not restricted or is hardly restricted to effectively prevent a wire disconnection or damage derived from the partial bending deformation thereof.

Further, since the third conducting portion 28 is bent to be inserted into the insertion bore 40 provided at the recessed groove 14, the elastic force generated at the bent portion 28a can be utilized when the back surface of the bent portion 28a is brought into contact with the sliding portions 41 and 41. Thus, the bent portion 28a can be easily mounted to the insertion bore 40. Still further, since the contacts A through D of the detecting portions of the load detection device 8 are fixed to the seating-side outer surface of the pad member 10, the detecting portions can be easily positioned to desired locations.

According to the first embodiment of the invention, the width of the penetrating bore 51 is formed to be wider than the distance between the sliding portions 41 and 41 so that the back surface of the bent portion 28a may not come into contact with the wall surfaces of the penetrating bore 51, when the bent portion 28b, which corresponds to the tip end portion of the bent portion 28a of the third conducting portion 28, advances into the penetrating bore 51. Thus, since the back surface of the bent portion 28a comes into contact only with the sliding portions 41 and 41, the sliding resistance received by the bent portion 28a is so small that the bent portion 28a is not deformed to be bent by the friction force and accordingly, no excess partial stress is generated on the bent portion 28a. Further, the drafting of the insertion bore 40 from the die can be easily performed compared to the case where the penetrating bore is formed in such a manner that the width thereof is the same as that of the recessed groove 14. This can reduce the cost of manufacturing the pad member 10 using a simple mold.

According to the example shown in Fig. 6, the penetrating bore 43 of the insertion bore 40 is provided from the bottom portion of the recessed groove 14 to the back surface of the pad member 10. However, the penetrating bore can be provided from the back surface of the pad member 10 to the sliding portions 41 and 41 extending in the oppositely facing groove inner side surfaces 14a and 14a. By this structure, according to the second modified example shown in Fig.9, the length of the sliding portions 41 and 41 can be freely shortened in a sliding direction. Thus, since the length of the sliding portions 41 in the sliding direction can be shortened, the sliding contact area between the bent portion 28a and the sliding portions 41 and 41 can be further away from the second bent portion 28b which corresponds to the tip end portion where the force pushing the sliding portions 41 and 41 generated by the bent portion 28a elastically returning to the original state is the strongest. This can reduce the pushing force towards the sliding portions 41 and 41 and accordingly, the sliding resistance force applied to the bent portion 28a during the sliding movement can be properly restricted. This will further allow the bent portion 28a to slide smoothly without resistance force and the bent portion 28a would not be deformed by the friction force generated between the bent portion 28a and the sliding portions 41 and 41, which will restrain the generation of an excess stress.

Further, when the distance between the sliding portions 41 and 41 becomes short, the curvature of the tip end portion 28b of the bent portion 28a becomes large and accordingly, the force applied to the sliding portions 41 and 41 becomes large. However, by shortening the length of the sliding portions 41 and 41 in a sliding direction, the contact area of the bent portion 28a which makes contact with the sliding portions 41 and 41 is distanced away from the second bent portion 28b which corresponds to the tip end portion of the bent portion 28. Thus the distance between the sliding portions 41 and 41, i.e., the gap between the side walls of the recessed groove 14 can be also shortened to improve the outer appearance and to reduce uncomfortable feeling of the occupant when touching the recessed groove during being seated on the vehicle seat.

Further, according to the first embodiment, since the rounded portions 42 and 42 (R-portion) are provided at the connecting portion between the groove inner side surfaces 14a and the seating-side outer surfaces, the first bent portions 44 and 44 of the bent portion 28a which are to be in contact with the rounded portions 42 and 42 can be surely bent along the rounded outer shape of the rounded portions 42 and 42. Accordingly, bending deformation at this area can be prevented.

Further, according to the first embodiment, the length of the third conducting portion 28 between the two contact portions, contacts A and B and contacts C and D is determined so that the pitch between the contacts A and B and the contacts C and D of the two detecting portions located at both sides of the insertion bore 40 of the recessed groove 14 may be the predetermined value when the load detection device 8 is mounted to the pad member 10. The load detection device 8 is mounted in such a manner that the first bent portions 44 and 44 formed by bending the bent portion 28a are brought into contact with the rounded portions 42 and 42 of the recessed groove 14 portion of the insertion bore 40 and at the same time the back surface of the bent portion 28a is brought into contact with the sliding portions 41 and 41. In other words, the pitch length between the two contact portions, contacts A and B and contacts C and D, located at both sides of the insertion bore 40 can be determined by simply setting the length of the third conducting portion 28 which is inserted into the insertion bore 40. Since the penetrating bore 51 is provided at the portion of the insertion bore 40 lower than the recessed groove 14 so that the bent portion 28a can be advancing into the penetrating bore, the bent portion 28a can be mounted along the inner side surfaces of the insertion bore 40 without being interfered in a wide range of depth. Therefore, the mounting pitch between the two detecting portions, contacts A and B and contacts C and D, located at both sides of the insertion bore 40 (recessed groove 14) can be adaptable in a wide range and even if the mounting pitch of contacts A and B and contacts C and D is different, the common load detection device 8 can easily cope with the difference in pitch. Thus the cost reduction of the manufacturing of the load detection device can be realized by utilizing the common load detection device 8.

Next, the second embodiment of the invention will be explained. As shown in fig. 10, the shape of the third conducting portion 28 of the load detection device 8 in the first embodiment is changed to the shape of the third conducting portion 48 in the second embodiment. Different points only will be explained and the common components will be omitted from the explanation. The common components have the same numerals as the previous embodiments.

As shown in Figs. 11 and 10, according to the second embodiment, in the third conducting portion 48, the width of the bent portion 48a to be formed by bending to be in contact with the sliding portions 41 is smaller than the width of the other portion of the third conducting portion 48 and accordingly, the portion to be in contact with the sliding portions is easier to be elastically bent than the other portion thereof. Thus, the pushing force which acts on the sliding portions 41 and 41 when the bent portion 48a of the third conducting portion 48 is brought into slidable contact with the sliding portions 41 and 41 becomes smaller so that sliding resistance can be suppressed. By reducing or suppressing the sliding resistance force, the third conducting portion 48 can be surely slide and thereby, the possibility of deformation of the third conducting portion 48 by being bent by the sliding resistance generated by the sliding movement thereof on the sliding portions 41 and 41 can be reduced. At the same time the possibility of wire disconnection at the bent portion 48a due to an excess stress partially generated at the bent portion 48a deformed becomes very small. It is noted that the effects of providing the penetrating bore 51 is the same with those in the first embodiment. Accordingly, it can be said that the effects expected in the first example can be also expected here in the second embodiment.

It is noted here that in the first and the second embodiments, the seating detecting device 8 is formed to have the four contacts A through D as the detecting portions disposed in rectangular shape. However, the invention is not limited to this structure and for example, as shown in Fig. 13 (a) showing the outer surface of the seating detecting device and Fig. 13 (b) showing the back surface hereof, the four contacts A through D may be arranged in series and connected by the conducting portion 50 to be in rod shape. In this modified embodiment, the simple rod shaped structure can reduce cost of the seating detecting device and manufacturing cost thereof.

Further, the seating detecting device 8 has four contacts A through D as the detecting portions, but the number of detecting portions is not limited to four but providing at least two contacts can form the present invention.

Further, in the first and the second embodiments, the bent portions 28a and 48a are provided between the neighboring detecting portions (between contacts A and B and contacts C and D), but the invention is not limited to this structure. For example, any place of the conducting portion such as between the connector 32 (external output portion 33) and the detecting portions (contacts C, D) and so on will be acceptable, as long as such place crosses over the recessed groove.

Further, according to the first and the second embodiments, the recessed groove 14 is formed by depression in the pad member 10 in a right/left direction but the invention is not limited to this structure. The recessed groove may be provided along in the front/rearward direction of the seat. This structure also can obtain the same effects.

### INDUSTRIAL APPLICABILITY

The mounting structure of the seat sensor for a vehicle according to the invention can be adaptive to the vehicle seat which detects the seating condition of an occupant of the vehicle seated on the seat.

### EXPLANATION OF REFERENCE NUMERALS

2: vehicle seat, 8: load detection device 10: pad member, 12: surface skin member, 14: recessed groove, 24: first conducting portion, 26: second conducting portion, 28, 48: third conducting portion, 28a, 48a: bent portion, 28b second bent portion, 30: fourth conducting portion, 40: insertion bore, 41: sliding portion, 42: rounded portion (R-portion), 43, 51, 53 and 54: penetrating bore, 44: first bent portion, 50: conducting portion, A through D: contact (detecting portion)

## Claims

1. A load detection device mounting structure, a film shaped load detection device (8) of which comprises a plurality of detecting portions (A through D) to be brought into contact with a seating-side outer surface of a pad member (10) of a vehicle to detect a load applied to the pad member (10), an external output portion (33) for outputting a load signal detected by the detecting portions (A through D) and conducting portions (24, 26, 28, 30, 48) for conducting between two of the plurality of detecting portions (A through D) and between the detecting portions (A through D) and the external output portion (33), wherein the film shaped load detection device (8) is mounted to the vehicle seat (2) by inserting a bent portion (28a, 48a) formed by bending at least a portion of the conducting portion (28, 48) into the recessed groove (14) between a seating-side outer surface of the pad member (10) having a recessed groove (14) formed by depression therein and a surface skin member (12) mounted on the pad member (10) to cover the seating-side outer surface in a manner of crossing over the recessed groove (14), sliding portions (41) are provided at a pair of oppositely facing inner side surfaces (14a) of the groove (14), with which back surface of the bent portion (28a, 48a) is brought into contact, and a penetrating bore (51) penetrating from the recessed groove (14) through the back surface of the pad member (10) is provided at the inserting portion of the pad member (10) for inserting the bent portion (28a, 48a) and the bent portion (28a, 48a) is freely movable within the penetrating bore (51) in an upper/lower direction by a sliding movement between the bent portion (28a, 48a) and the sliding portions (41) when the pad member (10) is compressed to deform downward by the seating load applied to the pad member (10), and
the penetrating bore (51) is formed to have a width wider than a gap between the oppositely facing sliding portions (41) so that the back surface of the conducting portion (28, 48) of the film shaped load detection device (8) may not be brought into contact with the penetrating bore (43, 51, 53, 54) when a tip end portion (28b) of the bent portion (28a, 48a) of the film shaped load detection device (8) is inserted into the penetrating bore (51),
further the penetrating bore (51) being formed by inclined surfaces (51 a, 51 b) so that widths thereof gradually increase towards the back surface of the pad member (10).

2. The load detection device mounting structure according to claim 1, wherein the penetrating bore (51) is formed extending in the oppositely facing inner side surfaces (14a) of the recessed groove (14) up to the sliding portions (41).

3. The load detection device mounting structure according to claim 1 or 2, wherein the width of the portion of the conducting portion (48) to be brought slidable contact with the sliding portions is smaller than the width of the other portion of the conducting portion (48).

4. The load detection device mounting structure according to any one claims 1 through 3, wherein rounded portions (R-portion) (42) are provided at connecting portions between the inner side surfaces (14a) of the recessed groove (14) and the seating-side outer surface of the pad member (10).

5. The load detection device mounting structure according to any one of claims 1 through 4, wherein a length of the conducting portion (28, 48) between the two detecting portions (A, B and C, D) is set so that a pitch length of the two detecting portions (A,B and C,D) located at both sides of the recessed groove (14) may become a predetermined value when the conducting portion (28, 48) is bent to be brought into contact with the sliding portions (41) to be mounted.

## Patentansprüche

1. Montagestruktur für eine Lastdetektionsvorrichtung, die eine filmförmige Lastdetektionsvorrichtung (8) aufweist, die mehrere Detektionsabschnitte (A bis D), die mit einer sitzseitigen Außenfläche eines Polsterelements (10) eines Fahrzeugs in Kontakt gebracht werden sollen, um eine auf das Polsterelement (10) wirkende Last zu detektieren, einen externen Ausgabeabschnitt (33) zum Ausgeben eines durch die Detektionsabschnitte (A bis D) detektierten Lastsignals sowie leitende Abschnitte (24, 26, 28, 30, 48) zum Leiten zwischen zwei der mehreren Detektionsabschnitte (A bis D) und zwischen den Detektionsabschnitten (A bis D) und dem externen Ausgabeabschnitt (33) umfasst, wobei die filmförmige Lastdetektionsvorrichtung (8) an dem Fahrzeugsitz (2) montiert wird, indem ein gebogener Abschnitt (28a, 48a), der durch Biegen mindestens eines Abschnitts des leitenden Abschnitts (28, 48) gebildet wird, in die ausgesparte Nut (14) zwischen einer sitzseitigen Außenfläche des Polsterelements (10), das eine durch Eindrücken gebildete ausgesparte Nut (14) aufweist, und einem Sitzbezugelement (12), das auf dem Polsterelement (10) montiert ist, um die sitzseitige Außenfläche in einer solchen Weise zu bedecken, dass es sich über die ausgesparte Nut (14) erstreckt, eingeschoben wird, wobei Gleitabschnitte (41) an einem Paar sich gegenüberliegender innenseitiger Flächen (14a) der Nut (14) angeordnet sind, mit denen eine Rückseite des gebogenen Abschnitts (28a, 48a) in Kontakt gebracht wird, und eine Durchgangsbohrung (51), die von der ausgesparten Nut (14) durch die Rückseite des Polsterelements (10) reicht, an dem Einschubabschnitt des Polsterelements (10) zum Einschieben des gebogenen Abschnitts (28a, 48a) angeordnet ist, und der gebogene Abschnitt (28a, 48a) innerhalb der Durchgangsbohrung (51) durch eine Gleitbewegung zwischen dem gebogenen Abschnitt (28a, 48a) und den Gleitabschnitten (41) in einer vertikalen Richtung frei beweglich ist, wenn das Polsterelement (10) zusammengedrückt wird, so dass es sich durch die auf das Polsterelement (10) wirkende Sitzlast nach unten verformt, und
die Durchgangsbohrung (51) so ausgebildet ist, dass sie breiter ist als ein Spalt zwischen den sich gegenüberliegenden Gleitabschnitten (41), so dass die Rückseite des leitenden Abschnitts (28, 48) der filmförmigen Lastdetektionsvorrichtung (8) nicht mit der Durchgangsbohrung (43, 51, 53, 54) in Kontakt gebracht werden kann, wenn ein Spitzenendabschnitt (28b) des gebogenen Abschnitts (28a, 48a) der filmförmigen Lastdetektionsvorrichtung (8) in die Durchgangsbohrung (51) eingeführt wird,
wobei die Durchgangsbohrung (51) ferner durch geneigte Flächen (51 a, 51 b) gebildet wird, die in Richtung der Rückseite des Polsterelements (10) allmählich breiter werden.

2. Montagestruktur für eine Lastdetektionsvorrichtung nach Anspruch 1, wobei die Durchgangsbohrung (51) so gebildet wird, dass sie sich in den sich gegenüberliegenden innenseitigen Flächen (14a) der ausgesparten Nut (14) bis zu den Gleitabschnitten (41) erstreckt.

3. Montagestruktur für eine Lastdetektionsvorrichtung nach Anspruch 1 oder 2, wobei die Breite des Abschnitts des leitenden Abschnitts (48), der in Gleitkontakt mit den Gleitabschnitten gebracht werden soll, kleiner ist als die Breite des anderen Abschnitts des leitenden Abschnitts (48).

4. Montagestruktur für eine Lastdetektionsvorrichtung nach einem der Ansprüche 1 bis 3, wobei gerundete Abschnitte (R-Abschnitt) (42) an Verbindungsabschnitten zwischen den innenseitigen Flächen (14a) der ausgesparten Nut (14) und der sitzseitigen Außenfläche des Polsterelements (10) angeordnet sind.

5. Montagestruktur für eine Lastdetektionsvorrichtung nach einem der Ansprüche 1 bis 4, wobei eine Länge des leitenden Abschnitts (28, 48) zwischen den zwei Detektionsabschnitten (A, B und C, D) so eingestellt wird, dass eine Steigungslänge der zwei Detektionsabschnitte (A, B und C, D), die auf beiden Seiten der ausgesparten Nut (14) angeordnet sind, ein zuvor festgelegter Wert werden kann, wenn der leitende Abschnitt (28, 48) gebogen wird, um zur Montage in Kontakt mit den Gleitabschnitten (41) gebracht zu werden.

## Revendications

1. Structure de montage de dispositif de détection de charge, dont un dispositif de détection de charge en forme de film (8) comporte une pluralité de parties de détection (A à D) devant être amenée en contact avec une surface extérieure du côté assise d'un élément de garniture (10) d'un véhicule pour détecter une charge appliquée sur l'élément de garniture (10), une partie de sortie externe (33) pour délivrer un signal de charge détecté par les parties de détection (A à D) et des parties conductrices (24, 26, 28, 30, 48) pour assurer la conduction entre deux de la pluralité de parties de détection (A à D) et entre les parties de détection (A à D) et la partie de sortie externe (33), dans laquelle le dispositif de détection de charge en forme de film (8) est monté sur le siège de véhicule (2) en insérant une partie coudée (28a, 48a) formée en pliant au moins une partie de la partie conductrice (28, 48) dans la rainure renfoncée (14) entre une surface extérieure du côté assise de l'élément de garniture (10) ayant une rainure renfoncée (14) formée par une dépression en son sein et un élément de revêtement de surface (12) monté sur l'élément de garniture (10) pour recouvrir la surface extérieure du côté assise d'une manière croisant la rainure renfoncée (14), des parties coulissantes (41) sont prévues au niveau d'une paire de surfaces latérales intérieures orientées de manière opposée (14a) de la rainure (14), avec lesquelles la surface arrière de la partie coudée (28a, 48a) est mise en contact, et un alésage pénétrant (51) qui pénètre depuis la rainure renfoncée (14) à travers la surface arrière de l'élément de garniture (10) est prévu au niveau de la partie d'insertion de l'élément de garniture (10) pour insérer la partie coudée (28a, 48a) et la partie coudée (28a, 48a) est librement mobile à l'intérieur de l'alésage pénétrant (51) dans une direction supérieure/inférieure grâce à un mouvement coulissant entre la partie coudée (28a, 48a) et les parties coulissantes (41) quand l'élément de garniture (10) est comprimé pour se déformer vers le bas par la charge d'assise appliquée sur l'élément de garniture (10), et
l'alésage pénétrant (51) est formé pour avoir une largeur plus grande qu'un espace entre les parties coulissantes orientées de manière opposée (41) de telle sorte que la surface arrière de la partie conductrice (28, 48) du dispositif de détection de charge en forme de film (8) peut ne pas être amenée en contact avec l'alésage pénétrant (43, 51, 53, 54) quand une partie d'extrémité terminale (28b) de la partie coudée (28a, 48a) du dispositif de détection de charge en forme de film (8) est insérée dans l'alésage pénétrant (51),
l'alésage pénétrant (51) étant en outre formé par des surfaces inclinées (51a, 51b) de telle sorte que des largeurs de celles-ci augmentent progressivement vers la surface arrière de l'élément de garniture (10).

2. Structure de montage de dispositif de détection de charge selon la revendication 1, dans laquelle l'alésage pénétrant (51) est formé en s'étendant dans les surfaces latérales intérieures orientées de manière opposée (14a) de la rainure renfoncée (14) jusqu'aux parties coulissantes (41).

3. Structure de montage de dispositif de détection de charge selon la revendication 1 ou 2, dans laquelle la largeur de la partie de la partie conductrice (48) devant être amenée en contact coulissant avec les parties coulissantes est plus petite que la largeur de l'autre partie de la partie conductrice (48).

4. Structure de montage de dispositif de détection de charge selon l'une quelconque des revendications 1 à 3, dans laquelle des parties arrondies (partie R) (42) sont prévues au niveau de parties de raccordement entre les surfaces latérales intérieures (14a) de la rainure renfoncée (14) et la surface extérieure du côté assise de l'élément de garniture (10).

5. Structure de montage de dispositif de détection de charge selon l'une quelconque des revendications 1 à 4, dans laquelle une longueur de la partie conductrice (28, 48) entre les deux parties de détection (A, B et C, D) est établie de telle sorte qu'une longueur de pas des deux parties de détection (A, B et C, D) situées des deux côtés de la rainure renfoncée (14) peut devenir une valeur prédéterminée quand la partie conductrice (28, 48) est pliée pour être mise en contact avec les parties coulissantes (41) devant être montées.
